(19) Europäisches Patentamt / European Patent Office / Office européen des brevets

(11) **EP 3 101 059 B1**

(12) **EUROPEAN PATENT SPECIFICATION**

(45) Date of publication and mention
of the grant of the patent:
**20.02.2019 Bulletin 2019/08**

(21) Application number: **14880835.5**

(22) Date of filing: **25.12.2014**

(51) Int Cl.:
*C08J 5/08* (2006.01)    *C03C 25/48* (2006.01)
*C03C 25/10* (2018.01)    *C03C 25/475* (2018.01)
*B29K 309/08* (2006.01)

(86) International application number:
**PCT/JP2014/084367**

(87) International publication number:
**WO 2015/115012 (06.08.2015 Gazette 2015/31)**

(54) **COLORED GLASS FIBER AND MANUFACTURING METHOD THEREFOR**

GEFÄRBTE GLASFASER UND HERSTELLUNGSVERFAHREN DAFÜR

FIBRE DE VERRE COLORÉE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2014 JP 2014013802**

(43) Date of publication of application:
**07.12.2016 Bulletin 2016/49**

(73) Proprietors:
• **Nitto Boseki Co., Ltd
Fukushima-shi, Fukushima 960-8161 (JP)**
• **Nitto Glasstex Co., Ltd.
Oura-gun, Gunma 370-0523 (JP)**

(72) Inventors:
• **MORI, Hiroshi
Oura-gun
Gunma 370-0523 (JP)**

• **MISHIMA, Satoshi
Oura-gun
Gunma 370-0523 (JP)**
• **AIZAWA, Tsunefumi
Fukushima-shi
Fukushima 960-8161 (JP)**
• **KOYAMA, Nobumichi
Fukushima-shi
Fukushima 960-8161 (JP)**

(74) Representative: **Neymeyr, Ulrich Theodor Paul
Dr. Schön, Neymeyr & Partner mbB
Bavariaring 26
80336 München (DE)**

(56) References cited:
**JP-A- 2004 315 981    JP-A- 2007 070 749
JP-B2- S5 917 059**

**Description**

Technical Field

The present invention relates to a colored glass fiber for use in fiber-reinforced plastics and fiber-reinforced thermoplastics, a manufacturing method thereof, and a molded product using the glass fiber. In particular, when used as reinforcement fiber, the colored glass fiber allows the molded product to have high strength and good appearance.

Background Art

Molded plastic products have been widely used in general due to having light weight, good moldability, and inexpensiveness. A plastic as single material, however, is not suitable as structural material, since the elasticity and strength are poor. Accordingly, fiber-reinforced plastics (FRP) and fiber-reinforced thermoplastics (FRTP), in which reinforcement fibers such as glass fibers are mixed, have been developed.

Citation List

Patent Literature

Patent Literature 1: National Publication of International Patent Application No. 2008-516887
Patent Literature 2: Japanese Patent Laid-Open No. 2004-315981
Patent Literature 3: Japanese Patent Laid-Open No. 2007-092188

JP 2004 315981 A discloses that a glass fiber woven fabric colored with black pigment carbon black has a air permeability of 7 $cm^{-3} \times cm^{-2} \times s^{-1}$ or less according to the JIS R 3420 method and the ignition loss according to JIS R 3420 method is 0.1 to 0.5%.

Summary of Invention

Technical Problem

Glass fibers used as reinforcement fibers for fiber-reinforced plastics or fiber-reinforced thermoplastics have caused problems arising from the glass. The FRP and FRTP are often used wherein the resin is colored, and use of uncolored glass fibers caused the glass impregnated in the resin to appear white or transparent. Consequently, when there are undispersed glass fibers in the vicinity of the surface, problems in appearance occur such as a white look or transparent look, resulting in defective products.

In the case of using a glass fiber for thermoplastic resins as reinforcement fiber, the monofilaments of the glass fiber are exposed on the surface of a molded product, so that light is reflected by the monofilaments to cause flickering on the surface of the molded product, resulting in a disadvantage to give an impression of cheap quality.

Accordingly, colored glass fibers in which the glass fibers are colored have been used as reinforcement fiber (Patent Literatures 1 to 3). Patent Literature 1 and 2 disclose to obtain colored glass fibers by mixing a coloring agent such as carbon black with a surface treatment agent for treating glass fibers. In Patent Literature 3, a glass fiber fabric in which the surface is surface-treated with a silane coupling agent and treated with a dye-containing coloring agent is disclosed.

As disclosed in Patent Literature 1 and 2, in the case of coloring by a pigment-containing surface treatment agent, although the defects in appearance described above are decreased, the strength of a molded product is inevitably reduced due to scratches to glass caused by the direct contact of pigment particles with the glass surface,. As disclosed in Patent Literature 3, in the case of coloring after surface treatment with a silane coupling agent, no coating can be formed since a coating agent is not included, thereby causing problem of fluffing and strength.

Further, the surface treatment agent that contains a dye or the like is scattered in the surrounding area, so that a spinning site is inevitably contaminated with the dye. Accordingly, in the case of spinning, subsequently to a colored glass fiber, a colorless glass or a glass fiber colored by a different color, careful cleaning of the spinning machine and the surrounding area is required each time, so that the workability is poor.

The present invention can provide a colored glass fiber allowing the molded product with good appearance to be obtained without reduction in strength of the molded product, by performing a pre-treatment with a surface treatment agent and performing a coloring treatment after formation of a coating.

Solution to Problem

A colored glass fiber used in a fiber-reinforced plastics or fiber-reinforced thermoplastics according to the present invention includes a surface treatment layer and a colored layer which are laminated in this order on a glass fiber surface as defined in claim 1. The pigment is uniformly adhered to a surface of the colored glass fiber.

Due to a coating (surface treatment layer) formed from a surface treatment agent on the glass fiber surface, the glass fiber is not scratched by the pigment and the like contained in a coloring agent. Consequently, when the glass fiber is used as reinforcement fiber, no reduction in the strength of the molded product occurs.

Also, in order to meet the criteria for appearance and the like of the molded product, and the physical criteria such as the strength of the molded product, the sum of the weight of the surface treatment layer and the colored layer is preferably in the above range with respect to the weight of glass fiber.

In particular, since the provision of a specific amount of a silane coupling agent-containing surface treatment layer and a colored layer affects the strength of the molded product, the sum of the weight of the surface treatment layer and the colored layer is preferably 0.25 wt% or more with respect to the weight of glass fiber. In the case where the sum of the weight of the surface treatment layer and the colored layer is more than 1.70 wt% with respect to the weight of the glass fiber, the strength of the molded product is reduced and the incidence of blocking is increased due to the occurrence of adhesion between each of the glass fibers by the excessive amount of the treatment agent. Accordingly, the sum of the weight of the surface treatment layer and the colored layer is preferably 1.70 wt% or less with respect to the weight of the glass fiber.

According to the colored glass fiber of the present invention the surface treatment layer has a weight of 0.20 to 1.30 wt% with respect to the weight of the glass fiber and the colored layer has a weight of 0.03 to 0.50 wt% with respect to the weight of the glass fiber.

In the case where the weight of the surface treatment layer is less than 0.20 wt% with respect to the weight of the glass fiber, the thickness of the coating on the glass surface is insufficient, so that the glass is scratched by a pigment in some cases, resulting in insufficient strength of the molded product. In the case where the weight of the surface treatment layer is more than 1.30 wt% with respect to the weight of the glass fiber, the excessive amount of the surface treatment agent causes the adhesion between each of the chopped strands, thereby increasing the incidence of blocking. Consequently, the flow stability of chopped strands is reduced, so that the glass fibers are not uniformly kneaded into a resin, causing reduction in the strength of the molded product and defects in the appearance. In addition, the excessive surface treatment agent prevents adhesion between the resin and the glass fiber, so that the strength of the molded product is reduced.

In roving, the presence of an excessive coating component prevents interfacial adhesion between the resin and the glass fibers and worsens the impregnation of the resin into the glass fibers, causing whitening and reduction in the strength.

Further, in the case where the weight of the colored layer is less than 0.03 wt% with respect to the weight of the glass fiber, the amount of a pigment adhered to the glass fiber is small, so that the glass fiber is unevenly colored or the color is pale, resulting in defects in appearance of the molded product.

Meanwhile, in the case where the weight of the colored layer is more than 0.50 wt% with respect to the weight of the glass fiber, the excessive amount of the coloring agent results in increase in the incidence of blocking. Consequently, the flow stability of chopped strands reduces, so that the glass fibers are not uniformly kneaded into a resin, causing reduction in the strength of the molded product and defects in the appearance. In roving, the presence of an excessive pigment prevents adhesion between the resin and the glass fibers and worsens the impregnation of the resin into the glass fibers, causing whitening and reduction in the strength.

The colored glass fiber according to the present invention is characterized in that a weight ratio of the first silane coupling agent to the second silane coupling agent is 20:80 to 95:5.

In the case where the weight ratio between the first silane coupling agent and the second silane coupling agent is out of the range of 20:80 to 95:5, the strength of the molded product becomes very low.

The colored glass fiber according to the present invention is characterized in that a total weight of the first silane coupling agent and the second silane coupling agent is 2.0 to 65.0 wt% with respect to the sum of the weight of the surface treatment layer and the weight of the colored layer.

In the case where a silane coupling agent content is less than 2.0 wt% with respect to the sum of the weight of the surface treatment layer and the weight of the colored layer, uneven adhesion, flickering, and poor appearance of the molded product are caused and the strength of the molded product becomes very low.

Furthermore, in the case where a silane coupling agent content is more than 65.0 wt% with respect to the sum of the weight of the surface treatment layer and the weight of the colored layer, the flow stability of chopped strands are extremely worsened.

The colored glass fiber according to an aspect of the present invention is characterized by being a chopped strand or a roving.

The reason is that glass fibers are used as reinforcement fiber typically in a chopped strand form or a roving form. As long as the colored glass fiber of the present invention is used as reinforcement fiber in any one of the forms, a molded product excellent in both of the strength and the appearance can be obtained.

The colored glass fiber according to an aspect of the present invention is characterized by having an elliptical cross section. The elliptical shape means a shape including a rectangle to which semicircles are attached to both ends, and a similar shape.

The reason is that by having an elliptical cross section the cross sectional area becomes large, thereby increasing the contact area with the resin, so that a molded product having higher strength can be obtained. Herein, the cross section of a glass fiber means the cross section of a glass fiber filament to be bundled into a glass fiber (glass fiber bundle), in the direction perpendicular to the fiber length direction.

The method for obtaining a colored glass fiber for use in fiber-reinforced plastics or fiber-reinforced thermoplastics according to an aspect of the present invention comprises:

a surface treatment step of treating glass fibers with a surface treatment agent including 2 to 40 wt% of a first silane coupling agent, 60 to 95 wt% of a coating agent and 0.1 to 10 wt% of a surfactant as components other than a solvent with respect to a sum of the weight of the components other than the solvent, while the surface treatment agent contains no pigment,;

a step of obtaining a glass fiber fonned with a surface treatment layer by drying;

a coloring step of forming a colored layer by treating the glass fiber formed with the surface treatment layer with a coloring agent including a second silane coupling agent and a pigment,

wherein the treatment is performed to have a sum of a weight of the surface treatment layer and the colored layer of 0.25 to 1.70 wt% with respect to a weight of the glass fiber

wherein the surface treatment layer has a weight of 0.20 to 1.30 wt% with respect to the weight of the glass fiber; and the colored layer has a weight of 0.03 to 0.50 wt% with respect to the weight of the glass fiber,

wherein a weight ratio of the first silane coupling agent to the second silane coupling agent is 20:80 to 95:5,

wherein a total weight of the first silane coupling agent and the second silane coupling agent is 2.0 to 65.0 wt% with respect to the sum of the weight of the surface treatment layer and the weight of the colored layer; and

a water-washing step of washing with water.

After the treatment with the surface treatment agent which includes the first silane coupling agent, the treatment with the coloring agent which includes the second silane coupling agent is performed, so that a pigment is adhered to the surface of glass fiber. Since the coloring step is performed using the coloring agent which includes the silane coupling agent, a colored glass fiber having good adhesion with the resin can be obtained. Further, since a coating (surface treatment layer) is formed by the surface treatment agent on the surface of glass, the glass fiber is not scratched by the pigment or the like contained in the coloring agent in the subsequent coloring step. Consequently, when being used as reinforcement fiber, reduction in strength of the molded product is not caused.

Further, the water-wash after the coloring treatment removes the excessive amount of the coloring agent, so that uniform adhesion of pigment particles to the glass fiber can be achieved.

In order to maintain the strength of the molded product, the sum of the weight of the surface treatment layer and the colored layer is 0.25 wt% or more with respect to the weight of the glass fiber. Meanwhile, in the case of the sum of the weight of the surface treatment layer and the colored layer is more than 1.70 wt% with respect to the weight of the glass fiber, the excessive amount of the treatment agent causes adhesion between the glass fibers, resulting in increase in the strength of the molded product and the incidence of blocking.

The method for obtaining the colored glass fiber for use in fiber-reinforced plastics or fiber-reinforced thermoplastics according to an aspect of the present invention comprises coloring a glass fiber in a chopped strand form or a roving form.

Glass fibers are used as reinforcement fiber typically in a chopped strand form or a roving form. As long as the colored glass fiber is manufactured by the manufacturing method of the present invention, a molded product excellent in both of the strength and the appearance for use as reinforcement fiber can be obtained in any one of the forms.

The colored glass fiber according to an aspect of the present invention is characterized by being obtained by the manufacturing method.

As long as the colored glass fiber obtained by the manufacturing method according to an aspect of the present invention is used, a molded product having high strength with good appearance can be obtained.

The fiber-reinforced plastic or the fiber-reinforced thermoplastic according to an aspect of the present invention comprises the colored glass fiber, and a plastic or a thermoplastic.

A composite material using the colored glass fiber according to an aspect of the present invention allows a molded product having high strength with an excellent appearance to be obtained.

Brief Description of Drawings

FIG. 1A and FIG. 1B are schematic views, FIG. 1A showing a cross section of the surface portion of a colored glass fiber of the present invention and FIG. 1B showing a cross section of the surface portion of a colored glass fiber manufactured by a conventional method.
FIG. 2 is a flow chart showing a manufacturing method of the colored glass fiber according to an aspect of the present invention.

Description of Embodiment

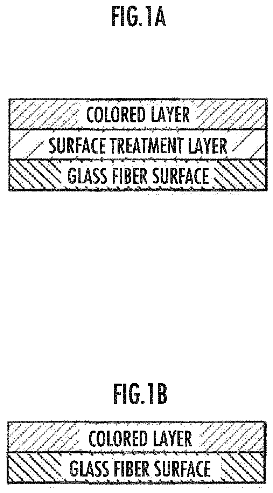

The schematic view of the surface structure of a colored glass fiber according to an aspect of the present invention is shown in FIG. 1A. In the present invention, after treatment with a surface treatment agent, a treatment with a coloring agent is performed. Accordingly, a surface treatment layer is formed from the surface treatment agent on the glass surface, and a colored layer is further formed outside thereof.

Meanwhile, in the conventional method, a coloring agent is added to a surface treatment agent for use, so that the colored layer on the glass surface is integrally formed with the surface treatment agent (FIG. 1B).

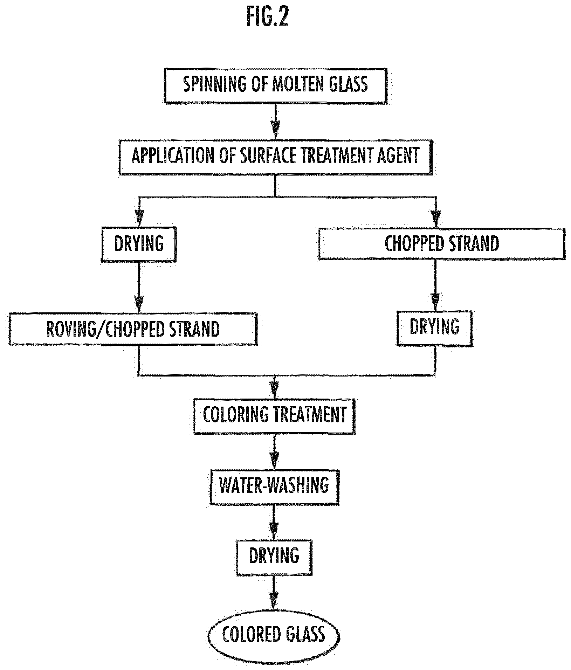

The manufacturing method of the present invention is shown in FIG. 2. A glass fiber can be obtained by spinning molten glass. The colored glass fiber according to an aspect of the present invention may be supplied in a chopped strand form or a roving form. A surface treatment agent is applied during spinning. The roving is subjected to a drying step, and the chopped strand is subjected to the drying step before or after cutting. A surface treatment layer is thus formed on the glass surface.

In the drying step, for example, a treatment at 70 to 140°C for 10 to 30 hours may be performed in the case of before cutting the glass fiber, or a treatment at 70 to 140°C for about 30 minutes to 1 hour may be performed in the case of after cutting. In the case of a roving, the coloring treatment is directly performed. In the case of a chopped strand, a coloring treatment is performed after being cut to a specified length. In the case of a roving, the coloring treatment is performed by continuous immersion in a coloring tank containing a coloring agent, so that coloring can be performed during winding.

In the case of a chopped strand, the manufactured chopped strands are placed in a coloring tank and agitated for a specified time so as to be colored.

The glass fiber in any of a roving form and a chopped strand form is subjected to a water-wash step and a drying step after coloring, so that a colored glass fiber product is manufactured.

The colored glass fiber according to an aspect of the present invention in a chopped strand form has a filament diameter of 3 to 19 $\mu$m and a cut length of 1.5 to 25 mm. Meanwhile, the roving has a yarn count (tex) of the glass fiber of 280 to 9600 tex. Herein, the yarn count of glass fiber is equivalent to the number of grams per 1000 m of glass fiber. The chopped strand and the roving in the above ranges may be used for fiber-reinforced plastics (FRP) and fiber-reinforced thermoplastics (FRTP) manufactured from various resins and by various methods.

In the present invention, "molded products" include both of fiber-reinforced plastics and fiber-reinforced thermoplastics.

The shape employed for the filament cross section of the colored glass fiber may be any one of an ellipse and a circle. An ellipse is more preferred, because improvement in the strength of the molded product is expected due to an increased cross-sectional area.

The surface treatment agent of the present invention includes a silane coupling agent, a coating agent, and a surfactant. Examples of the silane coupling agent include monoamino silane, diamino silane, methacrylic silane, epoxy silane, vinyl silane, acrylic silane, ureido silane, and mercapto silane. The silane coupling agent may be selected based on the affinity to the resin.

Examples of the coating agent include a urethane resin, an epoxy resin, an acrylic resin, a vinyl acetate resin, and a polyester resin. Addition of a coating agent allows a coating to be formed on the glass surface, preventing the glass surface from being scratched by pigment particles contained in the colored layer as the outer layer. The coating agent may be appropriately selected based on the affinity to the resin and the molding method.

Examples of the surfactant include a cationic surfactant, a non-ionic surfactant, and an anionic surfactant. Addition of a surfactant has effects for improving the stability of a surface treatment agent, reducing the occurrences rate of cutting of glass fiber during spinning, reducing fluffing during rewinding, preventing static electricity, and imparting softness to a glass fiber bundle.

The surface treatment agent contains a silane coupling agent, a coating agent, and a surfactant as components other than a solvent, in approximate amounts of 2 to 40 wt%, 60 to 95 wt%, and 0.1 to 10 wt%, respectively, with respect to the sum of the weight of the components other than the solvent.

The coloring agent of the present invention includes a silane coupling agent and a pigment. Examples of the silane coupling agent include monoamino silane, diamino silane, methacrylic silane, epoxy silane, vinyl silane, acrylic silane, ureido silane, and mercapto silane. The silane coupling agent may be selected based on the affinity to the resin for use in manufacturing the molded product.

The silane coupling agent contained in a surface treatment agent (hereinafter, referred to as a first silane coupling agent) and the silane coupling agent contained in a coloring agent (hereinafter, referred to as a second silane coupling agent) may be the same or different. The total content of the first silane coupling agent and the second silane coupling agent is preferably 2.0 to 65.0 wt% with respect to the total weight of the surface treatment layer and the colored layer (the sum of the weight of components other than the solvent in the surface treatment agent and the weight of components other than the solvent in the coloring agent), with a weight ratio of the first silane coupling agent to the second silane coupling agent of 20:80 to 95:5. Further, the total content of the first silane coupling agent and the second silane coupling agent is more preferably 5.0 to 30.0 wt%, still more preferably 8.0 to 20.0 wt%, with respect to the total weight of the surface treatment layer and the colored layer, which shows excellence in sizing properties of the glass fiber and strength of the molded product.

The amount of a surface treatment agent adhered (i.e. the weight of a surface treatment layer) and the amount of a coloring agent adhered (i.e. the weight of a colored layer) were measured in accordance with JIS R 3420. Namely, a specified amount is dried in a dryer at 105°C for 30 minutes and then cooled to room temperature. The weight of the specimen after drying is represented by $m_1$. The specimen is then heated in a muffle furnace adjusted to 625°C for 30 minutes, and then cooled to room temperature. The weight of the specimen after heating is represented by $m_2$. The ignition loss $H_2$ (mass fraction (%)) of the specimen was calculated from the following equation (1), as the amount of the surface treatment agent and the coloring agent adhered. Namely, the ignition loss of the colored glass fiber according to an aspect of the present invention corresponds to the sum of the amount of the surface treatment agent adhered and the amount of the coloring agent adhered, i.e., the sum of the weight of the surface treatment layer and the weight of the colored layer.

$$H_2 = (m_1 - m_2)/m_1 \times 100 \qquad (1)$$

If the weight ratio of the silane coupling agent is out of the above range, the layers of glass fiber/surface treatment agent (surface treatment layer)/coloring agent (colored layer) are easily peeled from each other, so that sufficient strength of the molded product cannot be obtained. Further, due to peeling of the colored layer, the effect for improving the appearance of the molded product by coloring is hard to be obtained.

The amount of a surface treatment agent adhered can be adjusted by the rotational speed of the roller for applying the surface treatment agent and the concentration of the surface treatment agent, in adhesion of the surface treatment agent to the glass fiber drawn from a bushing. For example, in the case of adjusting the weight of the surface treatment agent adhered, i.e., the weight of the surface treatment layer, to 0.20 wt% with respect to the weight of the glass fiber, the rotational speed of the roller for applying the surface treatment agent may be controlled to 10 to 19 m/min, and the concentration of the surface treatment agent (the ratio of the sum total of the weight of components other than the solvent contained in the surface treatment agent with respect to the total weight of the surface treatment agent including the solvent) may be controlled to 1.2 to 6.8%. Further, in the case of adjusting the weight of the surface treatment agent adhered to 1.30 wt%, the rotational speed of the roller for applying the surface treatment agent may be controlled to 20 to 35 m/min, and the concentration of the surface treatment agent may be controlled to 7.0 to 13.5 %. Of course the rotational speed of the roller for applying the surface treatment agent and the concentration of the surface treatment agent may be appropriately controlled to achieve a desired adhered amount, without limitation to the above.

Examples of the pigment contained in a coloring agent include an inorganic pigment such as carbon black and titanium oxide, a hollow particle latex pigment, an azo pigment, and a polycyclic pigment represented by a phthalocyanine pigment. Further, a plurality of pigments may be used in combination to obtain a desired color.

The particle diameter of the pigment is, for example, in the range of 0.01 to 1 μm. Here, the particle diameter represents the median diameter. The specific particle diameter ranges of the pigment for use may be 0.02 to 0.3 μm for carbon black, 0.2 to 0.4 μm for titanium oxide, 0.5 to 1 μm for a hollow particle latex pigment (white), and 0.05 to 0.4 μm for a hollow particle latex pigment of any other color, respectively.

Further, the coloring agent may contain a surfactant. Examples of the surfactant include a cationic surfactant, a non-ionic surfactant, and an anionic surfactant or the like.

In the case of a roving, the adhered amount of a coloring agent can be adjusted by immersion in a coloring tank and the immersion time, and the concentration of the coloring agent.

The adhered amount of a coloring agent to a chopped strand can be adjusted by the time period of the treatment with the coloring agent and the concentration of the coloring agent.

Further, an excessive amount of the coloring agent is washed away in the water-washing step after the coloring step. Accordingly, the adhered amount of the coloring agent decreases by about 10 to 40%. Therefore, the coloring agent needs to be adhered in consideration of the amount of reduction.

For example, in the case of a chopped strand with an adhered amount of a final coloring agent, i.e., a weight of the colored layer, adjusted to 0.05 wt% with respect to the weight of the glass fiber, the treatment time with the coloring agent may be controlled to 10 to 60 minutes, and the concentration of the coloring agent (the ratio of the sum total of the weight of components other than the solvent contained in the coloring agent with respect to the total weight of the coloring agent including the solvent) to 0.7 to 3.5 wt%. In the case of an adhered amount of a coloring agent is adjusted to 0.40 wt%, the treatment time with the coloring agent may be controlled to 10 to 60 minutes, and the concentration of the coloring agent to 5.0 to 25.0 wt%. Of course the treatment time with the coloring agent and the concentration of the coloring agent may be appropriately controlled to achieve a desired adhered amount, without limitation to the above.

The molded product according to an aspect of the present invention comprises the colored glass fiber according to an aspect of the present invention, and a plastic or a thermoplastic. Examples of the plastic or the thermoplastic include a polyamide, polypropylene, polyacetal, polyethylene terephthalate, polybutylene terephthalate, polycarbonates, a polyester, polyphenylene sulfide, an epoxy resin, an unsaturated polyester resin, a vinyl ester resin, a phenolic resin, and an acrylic resin. The plastic or the thermoplastic is preferably colored with approximately the same color as the colored glass fiber, by including the pigment or the dye. Since the colored glass fiber of the present invention and the plastic or the thermoplastic are colored with approximately the same color, the effects for reducing flickering caused by the colored glass fiber and improving the appearance of a molded product increase. In order to obtain a particularly large effects for reducing flickering caused by the colored glass fiber of the present invention and improving the appearance of the molded product, the colored glass fiber of the present invention and the plastic or the thermoplastic are more preferably colored with a dark color (a color of low brightness such as black, brown, deep blue, deep green, and deep red), particularly preferably colored with black. Two color tones (L1, a1, b1) and (L2, a2, b2) being approximately the same color means, $\Delta E = ((L1-L2)^2+(a1-a2)^2+(b1-b2)^2)^{1/2}$ is 20 or less.

The present invention is described in detail with reference to Examples as follows.

Evaluation items of the glass fibers and the molded products shown in the following Table 1 were measured and evaluated by the following methods.

With regard to the adhesion uniformity of pigment particles (described as adhesion uniformity in Table 1), five scanning electron micrographs were taken. For each of the micrographs, ten fibers with a spot where a length of 300 μm can be measured were selected, and the number of pigment particles adhered in each spot was counted. The coefficient of variation was obtained from the mean and the standard deviation. A coefficient of variation of less than 30% is evaluated as uniform (good), and a coefficient of variation of 30% or more is evaluated as nonuniform (poor). In the present invention, when the coefficient of variation is less than 30%, it is defined that "the pigment is uniformly adhered to the surface of the colored glass fiber".

With regard to the flickering on the surface of a molded product caused by monofilaments (described as flickering in Table 1) and the appearance of a molded product, the determination was performed by visual observation. Specifically, the flickering on the surface of a molded product caused by monofilaments was determined depending on whether the glass fiber in the vicinity of the surface of a molded product reflected light and was observed to glitter. A product with no flickering observed at all is evaluated as good, a product with a slight flickering observed is evaluated as fair, and a product with flickering observed on the whole surface is evaluated as poor.

Further, with regard to appearance of a molded product, a molded product having a surface with white undispersed glass observed or with the glass fiber seen through is evaluated as poor, with the glass or the glass fiber slightly observed as fair, and with no glass or glass fiber observed as good.

With regard to the sizing properties of the glass fiber (described as GF sizing properties in Table 1), the determination was based on the measurement of the amount of fluffing. Poor sizing properties of a glass fiber causes fluffing on the surface of the glass fiber surface. In the case of chopped strands, 300 g of chopped strands placed in a beaker were agitated by an agitator at 100 rpm for 5 minutes, and the weight of the generated fluff was measured. An amount of fluff of less than 40 g was evaluated as satisfied (good) in sizing properties, 40 g or more and less than 60 g as unsatisfied (fair) in sizing properties, and 60 g or more as very unsatisfied (poor) in sizing properties.

In the case of a roving, after the roving is passed through a guide and run at a velocity of 20 m/min for 30 minutes, the amount of fluff accumulated on the guide is measured. An amount of fluff of less than 20 mg was evaluated as satisfied (good) in sizing properties, 20 mg or more and less than 30 mg as unsatisfied (fair) in sizing properties, and 30 mg or more as very unsatisfied (poor) in sizing properties.

With regard to the strength of a molded product, using a polyamide as resin, each of the glass fibers as reinforcement fiber was mixed with the resin to prepare a molded product, and the tensile strength of a dumbbell-shaped specimen was measured for determination. A tensile strength of 160 MPa or more is evaluated as very high in strength (excellent), 130 MPa or more and less than 160 MPa as high in strength (good), 110 MPa or more and less than 130 MPa as low in strength (fair), and 110 MPa or less as very low (poor) in strength. Incidentally, the strength was measured using an unsaturated polyester as thermosetting resin, and it was confirmed that the same tendency is observed regardless of the type of the resin.

The incidence of blocking (described as blocking in Table 1) was evaluated based on the weight of chopped strands remaining on the mesh after sieving of 100 g of chopped strands with a classifier for 10 seconds. Here, a sieve with a mesh of approximately 2.8 mm is employed, which is slightly smaller than the length of the chopped strands for use having a length of 3 mm.

An amount of the chopped strands remaining on the mesh of 10 g or less is evaluated as very low (good) in the incidence of blocking, more than 10 g and 25 g or less as low (fair), and more than 25 g as very high (poor).

The flow stability of chopped strands (described as CS flow stability in Table 1) represents the flow stability of chopped strands in the hopper of a molding machine or an extruder. The flow stability is represented by the coefficient of variation (C.V.) in the discharge amount between a set value and a measured value. Specifically, the rotational speed of the discharge screw in the hopper of a molding machine or the like is controlled to be constant, and the amount of the chopped strands remaining in the hopper is measured for a predetermined time at predetermined intervals. Using the start point and the end point of the measured quantity of the chopped strands remaining in the hopper, the slope is calculated. From the mean values and the standard deviation of the difference of each of the measurement results with respect to the slope, the coefficient of variation is calculated. A coefficient of variation of less than 40% is evaluated as excellent (good) in the flow stability, 40% or more and less than 55% as unsatisfied (fair) in the flow stability, and 55% or more as very unsatisfied (poor) in the flow stability.

[Table 1]

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Fiber form | CS | CS | CS | CS | CS | CS | CS | CS | CS | CS | CS | RS |
| Cross-sectional shape | Circular | Circular | Circular | Circular | Circular | Circular | Circular | Circular | Circular | Circular | Elliptical | Circular |
| Treatment method | Two-stage | Two-stage | Two-stage | Two-stage | Two-stage | Two-stage | Two-stage | Two-stage | Two-stage | Two-stage | Two-stage | Two-stage |
| Weight of surface treatment layer (wt%) | 0.60 | 0.20 | 1.30 | 0.60 | 0.60 | 0.60 | 0.60 | 0.60 | 0.60 | 0.20 | 0.60 | 0.60 |
| Content ratio (%) of SC agent in surface treatment layer | 10.0 | 10.0 | 10.0 | 10.0 | 10.0 | 25.0 | 10.0 | 10.0 | 2.0 | 40 | 10.0 | 10.0 |
| Amount of SC agent (wt%) in surface treatment layer | 0.06 | 0.02 | 0.13 | 0.06 | 0.06 | 0.15 | 0.06 | 0.06 | 0.012 | 0.08 | 0.06 | 0.06 |
| Weight of colored layer (wt%) | 0.20 | 0.20 | 0.20 | 0.05 | 0.40 | 0.20 | 0.03 | 0.50 | 0.20 | 0.40 | 0.20 | 0.25 |
| Content ratio (%) of SC agent in colored layer | 11.0 | 11.0 | 11.0 | 11.0 | 11.0 | 30.0 | 11.0 | 11.0 | 4.0 | 70.0 | 11.0 | 11.0 |
| Amount of SC agent (wt%) in colored layer | 0.022 | 0.022 | 0.022 | 0.0055 | 0.044 | 0.06 | 0.0033 | 0.055 | 0.008 | 0.28 | 0.022 | 0.0275 |
| SC agent content (wt%) | 10.25 | 5.5 | 10.1 | 10.1 | 10.1 | 26.3 | 10.0 | 10.5 | 2.5 | 60 | 10.25 | 10.3 |
| SC agent in surface treatment layer/SC agent in colored layer | 73/27 | 48/52 | 86/14 | 92/8 | 58/42 | 71/29 | 95/5 | 52/48 | 60/40 | 22/78 | 73/27 | 69/31 |
| Adhesion uniformity | Good | Good | Good | Good | Good | Good | Good | Good | Good | Good | Good | Good |
| Flickering | Good | Good | Good | Good | Good | Good | Fair | Good | Good | Good | Good | Good |
| Appearance of molded product | Good | Good | Good | Good | Good | Good | Fair | Good | Good | Good | Good | Good |
| GF sizing properties | Good | Good | Good | Good | Good | Good | Good | Good | Good | Fair | Good | Good |
| Strength of molded product | Good | Good | Good | Good | Good | Good | Good | Fair | Fair | Good | Excellent | Excellent |
| Blocking | Good | Good | Good | Good | Good | Good | Good | Good | Good | Good | Good | - |
| CS flow stability | Good | Good | Good | Good | Good | Good | Good | Fair | Good | Good | Good | - |

EP 3 101 059 B1

|  | Comparative Example | | | | | | | | | | | |
|---|---|---|---|---|---|---|---|---|---|---|---|---|
|  | 1 | 2 | 3 | 4 | 5 | 6 | 7 | 8 | 9 | 10 | 11 | 12 |
| Fiber form | CS | CS | CS | CS | CS | CS | CS | CS | CS | CS | RS | RS |
| Cross-sectional shape | Circular | Circular | Circular | Circular | Circular | Circular | Circular | Circular | Circular | Elliptical | Circular | Circular |
| Treatment method | One-stage | Uncolored | Two-stage | Two-stage | Two-stage | Two-stage | Two-stage | Two-stage | Two-stage | Uncolored | One-stage | Uncolored |
| Weight of surface treatment layer (wt%) | 0.80 | 0.60 | 0.60 | 0.03 | 1.60 | 0.60 | 0.60 | 0.60 | 0.60 | 0.60 | 0.80 | 0.60 |
| Content ratio (%) of SC agent in surface treatment layer | 10.0 | 10.0 | 10.0 | 10.0 | 10.0 | 10.0 | 0 | 1.0 | 70 | 10.0 | 10.0 | 10.0 |
| Amount of SC agent (wt%) in surface treatment layer | 0.08 | 0.06 | 0.06 | 0.003 | 0.16 | 0.06 | 0 | 0.006 | 0.42 | 0.06 | 0.08 | 0.60 |
| Weight of colored layer (wt%) | - | - | 0.20* | 0.20 | 0.20 | 0.20 | 0.20 | 0.20 | 0.20 | - | - | - |
| Content ratio (%) of SC agent in colored layer | - | - | 11.0 | 11.0 | 11.0 | 0 | 11.0 | 1.0 | 75 | - | - | - |
| Amount of SC agent (wt%) in colored layer | - | - | 0.022 | 0.022 | 0.022 | 0 | 0.022 | 0.002 | 0.15 | - | - | - |
| SC agent content (wt%) | - | - | 10.25 | 10.87 | 10.11 | 7.5 | 2.75 | 1.0 | 71.25 | - | - | - |
| SC agent in surface treatment layer/SC agent in colored layer | - | - | 73/27 | 12/88 | 88/12 | 100/0 | 0/100 | 75/25 | 74/26 | - | - | - |
| Adhesion uniformity | Poor | - | Poor | Good | Good | Poor | Good | Poor | Good | - | Poor | - |
| Flickering | Fair | Poor | Good | Good | Good | Poor | Good | Poor | Good | Poor | Good | Poor |
| Appearance of molded product | Fair | Poor | Good | Good | Good | Poor | Good | Poor | Good | Poor | Fair | Poor |
| GF sizing properties | Fair | Good | Good | Poor | Good | Good | Good | Good | Fair | Good | Fair | Good |
| Strength of molded product | Poor | Good | Good | Fair | Fair | Poor | Poor | Poor | Good | Excellent | Poor | Excellent |
| Blocking | Fair | - | Poor | Good | Poor | Good | Good | Good | Good | - | - | - |
| CS flow stability | Fair | Good | Poor | Poor | Fair | Good | Good | Good | Poor | Good | - | - |

Examination was made on: a two-stage treatment method (described as two-stage in the treatment method in Table 1) as the manufacturing method for a colored glass fiber of the present invention including the steps of treating with a surface treatment agent and thereafter treating with a coloring agent; a conventional method including adding a pigment to a surface treatment agent and performing the coloring treatment (described as one-stage in the treatment method in Table 1); and a method including a treatment with a surface treatment agent only, without coloring.

Chopped strands (CS) were used as a fiber form, with a circular cross-sectional shape. The treatment in each of the steps was performed to have an adhered amount of the surface treatment agent (hereinafter also referred to as the weight of the surface treatment layer) of 0.60 wt%, and an adhered amount of the coloring agent (hereinafter also referred to as the weight of the colored layer) of 0.20 wt%. The adhesion uniformity of pigment particles (described as adhesion uniformity in Table 1), flickering on the surface of the molded product caused by monofilaments (described as flickering in Table 1), the appearance of the molded product, the sizing properties of the glass fiber (described as GF sizing properties in Table 1), the strength of the molded product, the incidence of blocking (described as blocking in Table 1), and the flow stability of chopped strands (described as CS flow stability in Table 1) were analyzed (Example 1). The results are shown in Table 1.

Meanwhile, a same fiber form (CS) as Example 1 having a circular cross-section shape was used, and a pigment was added to the surface treatment agent by a conventional method, and a surface treatment agent was added, such that the adhered amount of the surface treatment agent equals to 0.80 wt%, as a total of 0.60 wt% as the adhered amount of the surface treatment agent and 0.20 wt% as the adhered amount of the coloring agent as in Example 1 (treatment method: one-stage, Comparative Example 1). Further, an uncolored glass fiber (Comparative Example 2) subjected to a treatment with the surface treatment agent only, including no coloring step, was prepared. The properties of the prepared glass fibers and molded products were analyzed.

A colored glass fiber having an adhered amount of the surface treatment agent of 0.60 wt% and an adhered amount of the coloring agent of 0.20 wt% as in Example 1, was obtained without being subjected to a water-washing step (Comparative Example 3, with the adhered amount of the coloring agent being represented by 0.20*). The properties of the glass fiber and molded product were analyzed. The Results are shown in Table 1.

The molded product using the uncolored glass fiber shown in Comparative Example 2 had poor appearance, having noticeable flickering on the surface, and also with the glass fibers seen through from the surface of the molded product. Further, in the case of coloring by one-stage treatment with the coloring agent being added to the surface treatment agent by the conventional method (Comparative Example 1), flickering was observed on the surface caused by monofilaments, probably due to poor adhesion uniformity of pigment particles.

Further, the colored glass fiber obtained without being subjected to the water-washing step had high incidence of blocking and resultant poor flow stability of chopped strands, though flickering and the appearance of the molded product were evaluated as satisfied. In addition, the adhesion uniformity of pigment particles was low.

In contrast, the colored glass fiber in Example 1 obtained through the two stages of the surface treatment step and the coloring treatment step in the manufacturing method of the present invention had no flickering, and the appearance of the molded product was very good.

Furthermore, in the case of the one-stage treatment shown in Comparative Example 1, the sizing properties of the glass fibers were unsatisfied, and the strength of the molded product was very low. It is presumed that the very low strength of the molded product was caused by absence of the layer of the surface treatment agent on the surface of the glass fiber, and therefore, allowing the glass fibers to be scratched with pigment particles. Moreover, the high incidence of blocking resulted in the poor flow stability of chopped strands.

Next, the weight of the surface treatment layer and the colored layer adhered to the glass fiber, and the properties of the glass fiber and the molded product were examined. In the analysis, chopped strands were used as the fiber form, with a circular cross-sectional shape.

A treatment was performed to have a weight of the surface treatment layer of 0.03 wt% and a weight of the colored layer of 0.20 wt%, i.e., the total weight of 0.23 wt% with respect to the glass fiber, and the properties of the glass fiber and the molded product were analyzed (Comparative Example 4). Further, a treatment was performed to have a weight of the surface treatment layer of 1.60 wt% and a weight of the colored layer of 0.20 wt%, i.e., a total weight of 1.80 wt% with respect to the glass fiber, and the properties of the glass fiber and the molded product were analyzed (Comparative Example 5).

The obtained results showed that the strength of the molded product using any of the glass fibers in Comparative Example 4 and Comparative Example 5 was low. Further, the glass fiber in Comparative Example 4 had very poor flow stability of chopped strands, and the glass fiber in Comparative Example 5 had a very high incidence of blocking. It is presumed that since both of the surface treatment layer and the colored layer have effects for protecting the glass fiber and improving the adhesion with the resin, an insufficient total amount affects the strength of the molded product. Further, it is presumed when the total amount is large, the glass fibers are adhered to each other by the excessive amount of the treatment agent, resulting in high incidence of blocking.

Based on the results, a conclusion was obtained that the total amount of the surface treatment layer and the colored layer is preferably in the range of 0.25 to 1.70 wt% with respect to the weight of the glass fiber.

Next, the adhered amount of the surface treatment agent was examined. In the examination, chopped strands were used as the fiber form, with a circular cross-sectional shape, and the adhered amount of the surface treatment agent was changed in the range of 0.03 to 1.60 wt%. In the analysis of the properties of the molded product, the adhered amount of the coloring treatment agent was fixed at 0.20 wt% for all.

The properties of the colored glass fibers and the molded products were analyzed for adhered amounts of the surface treatment agent of 0.03 wt% (Comparative Example 4), 0.20 wt% (Example 2), 1.30 wt% (Example 3), and 1.60 wt% (Comparative Example 5), respectively. Results are described in Table 1.

With regard to the flickering and the appearance of the molded product, good results were obtained in any of the Examples and the Comparative Examples even with the adhered amount of the surface treatment agent being changed, as long as coloring was performed.

However, in the case of using the colored glass fiber with a low adhered amount of the surface treatment agent of 0.03 wt% in Comparative Example 4, the sizing properties of the glass fiber was very poor, so that a problem with the very low flow stability of chopped strands occurred. Further, in the case of using the colored glass fiber with a high adhered amount of the surface treatment agent of 1.60 wt% in Comparative Example 5, a very high incidence of blocking was obtained probably due to the excessive amount of the adhesion agent, with the resultant of rather poor flow stability of chopped strands.

Based on the results, it is concluded that the appropriate adhered amount of the surface treatment agent is 0.20 to 1.30 wt%.

Next, using chopped strands as a fiber form, with a circular cross-sectional shape in the same manner as described above, the adhered amount of the coloring agent was examined. In the examination, the weight of the surface treatment layer was fixed at 0.60 wt%, and the weight of the colored layer was changed in the range of 0.03 to 0.50 wt%.

The resultant properties of the colored glass fiber and the molded product were analyzed for adhered amounts of the coloring agent of 0.03 wt% (Example 7), 0.05 wt% (Example 4), 0.20 wt% (Example 6), 0.40 wt% (Example 5), and 0.50 wt% (Example 8), respectively. Results are described in Table 1.

As shown in Examples 4 to 8, in the range of the weight of colored layer of 0.03 wt% to 0.50 wt%, none of the properties of the glass fibers and the molded products was evaluated as very unsatisfied (poor). Accordingly, the weight of the colored layer is preferably in the range of 0.03 wt% to 0.50 wt%.

In the case of the molded product using the glass fiber with a weight of the colored layer of 0.03 wt% (Example 7), the flickering and the appearance of the molded product were evaluated as unsatisfied (fair) due to an insufficient amount of the pigment. In the case of the molded product using the glass fiber with a weight of the colored layer of 0.50 wt% (Example 8), the strength of the molded product and the flow stability were evaluated as low (fair). In contrast, in the case of using the glass fiber with adhered amounts of the coloring agent of 0.05 wt% (Example 4), 0.20 wt% (Example 6), and 0.40 wt% (Example 5), respectively, the evaluation was excellent in all including the appearance of a molded product, the strength and the like. Accordingly, the weight of the colored layer is more preferably 0.05 wt% to 0.40 wt%.

Further, since a silane coupling agent (described as SC agent in Table 1) is important for adhesion of the glass to the resin, the content of the silane coupling agent was examined.

In the treatment of the glass fiber, the ratio of the first silane coupling agent to the second silane coupling agent was changed, and the properties of the glass fiber and the molded product were analyzed. The quantity ratio of the first silane coupling agent to the second silane coupling agent was changed from 22:78 (Example 10) to 95:5 (Example 7). For comparison, glass fibers which contain no first silane coupling agent or no second silane coupling agent were prepared (Comparative Examples 6 and 7) and molded products were manufactured for analysis of the properties of the glass fibers and the molded products. The results are shown in Table 1.

The ones which contain no first or second silane coupling agent had a very low strength of the molded product. Further, in the case of containing no second silane coupling agent, the poor quality in adhesion uniformity, flickering, and appearance of the molded product was obtained. Based on the results, it is concluded that the quantity ratio of the first silane coupling agent to the second silane coupling agent is preferably 20:80 to 95:5.

Further, the content of silane coupling agents was examined. In the treatment of glass fiber, the ratio of the total weight of the first silane coupling agent and the second silane coupling agent with respect to the sum of the weight of the surface treatment layer and the weight of the colored layer (referred to as the content of silane coupling agents) was changed, and the properties of the glass fiber and the molded product were analyzed.

In the case of a content of the silane coupling agent of 1.0 wt% (Comparative Example 8), the flickering and the appearance of the molded product were unsatisfied, due to the poor adhesion uniformity of pigments. In addition, resulting from the low content of the silane coupling agent, the strength of the molded product was very low possibly due to the poor adhesion with the resin.

Further, in the case of containing a large content of the silane coupling agent of 71.25 wt% (Comparative Example 9), the flow stability of chopped strands was very unsatisfied. In addition, the resultant sizing properties of the glass fiber was unsatisfied.

In contrast, in the case where the content of the silane coupling agent is 2.5 wt% (Example 9), although the strength of the molded product was evaluated as weak (fair), the other criteria were sufficiently satisfied; and in the case where the content of the silane coupling agent of 60 wt% (Example 10), although the sizing properties of the glass fiber was evaluated as unsatisfied (fair), the other criteria were sufficiently satisfied. Accordingly, it is concluded that the total content of the silane coupling agents are preferably 2.0 to 65.0 wt% with respect to the sum of the weight of the surface treatment layer and the weight of the colored layer.

Next, the influence of the difference in the cross-sectional shape was analyzed. A flat cross-sectional shape allows the surface area to increase, resulting in the increased adhesion area between the glass fiber and the resin. Consequently, the adhesion force is enhanced, so that higher strength of the molded product can be obtained. Meanwhile, due to the flat shape, the major diameter surfaces are disposed in parallel with respect to the surface of the molded product, so that the light reflected from the major diameter surface resulting in noticeable flickering caused by the monofilament when an uncolored glass fiber was used, which has been pointed out as a fault.

Accordingly, using the colored glass fiber with an elliptical cross section (Example 11) and an uncolored glass fiber (Comparative Example 10), properties of the molded products were analyzed.

As shown in Example 11, in the case of using a glass fiber colored by the method of the present invention, good results in both of the flickering and the appearance of the molded product were obtained, even though the glass fiber had an elliptical cross section. In contrast, in the case of using an uncolored glass fiber (Comparative Example 10), poor results in both of the flickering and the appearance of the molded product were obtained.

Lastly, the analysis was performed using a roving (RS: roving strand). The properties of the glass fibers and molded products were analyzed for a colored roving obtained by the method of the present invention (Example 12), a roving colored by a one-stage treatment (Comparative Example 11), and an uncolored roving (Comparative Example 12). The results are shown in Table 1.

In the case of using a glass fiber colored by the one-stage treatment (Comparative Example 11), the adhesion uniformity of pigment particles was low and the strength of the molded product was very low. In the case of using an uncolored one, the glass fiber was seen through the surface of the molded product, so that problems of flickering and the appearance of the molded product occurred. In contrast, in the case of a roving colored by the manufacturing method of the colored glass fiber of the present invention, good results were obtained without problems of the appearance of the molded product, the strength, and the like.

As described above, in the case of using the glass fiber as reinforcement fiber obtained by the manufacturing method of the present invention including the treatment with the surface treatment agent, a subsequent treatment with the coloring agent, and further water-washing, a molded product having excellent appearance and high strength can be obtained.

**Claims**

1. A colored glass fiber for use in fiber-reinforced plastics or fiber-reinforced thermoplastics, comprising:

   a surface treatment layer and a colored layer laminated in this order on a glass fiber surface;
   wherein the surface treatment layer is made of a surface treatment agent containing, 2 to 40 wt% of a first silane coupling agent, 60 to 95 wt% of a coating agent, and 0.1 to 10 wt% of a surfactant as components other than a solvent with respect to a sum of the weight of the components other than the solvent, while the surface treatment layer contains no pigment;;
   wherein the colored layer comprises a second silane coupling agent and a pigment, wherein a weight ratio of the first silane coupling agent to the second silane coupling agent is 20:80 to 95:5;
   wherein a sum of a weight of the surface treatment layer and the colored layer is 0.25 to 1.70 wt% with respect to a weight of the glass fiber,
   wherein the surface treatment layer has a weight of 0.20 to 1.30 wt% with respect to the weight of the glass fiber; and
   the colored layer has a weight of 0.03 to 0.50 wt% with respect to the weight of the glass fiber,
   wherein a total weight of the first silane coupling agent and the second silane coupling agent is 2.0 to 65.0 wt% with respect to the sum of the weight of the surface treatment layer and the weight of the colored layer; and
   wherein the pigment is uniformly adhered to a surface of the colored glass fiber.

2. The colored glass fiber according to claim 1, wherein
   the glass fiber is a chopped strand or a roving.

3. The colored glass fiber according to claims 1 or 2, wherein

the glass fiber has an elliptical cross section.

4. A manufacturing method for a colored glass fiber for use in fiber-reinforced plastics or fiber-reinforced thermoplastics, comprising:

a surface treatment step of treating glass fibers with a surface treatment agent including 2 to 40 wt% of a first silane coupling agent, 60 to 95 wt% of a coating agent and 0.1 to 10 wt% of a surfactant as components other than a solvent with respect to a sum of the weight of the components other than the solvent, while the surface treatment agent contains no pigment,;
a step of obtaining a glass fiber formed with a surface treatment layer by drying;
a coloring step of forming a colored layer by treating the glass fiber formed with the surface treatment layer with a coloring agent including a second silane coupling agent and a pigment,
wherein the treatment is performed to have a sum of a weight of the surface treatment layer and the colored layer of 0.25 to 1.70 wt% with respect to a weight of the glass fiber
wherein the surface treatment layer has a weight of 0.20 to 1.30 wt% with respect to the weight of the glass fiber; and
the colored layer has a weight of 0.03 to 0.50 wt% with respect to the weight of the glass fiber,
wherein a weight ratio of the first silane coupling agent to the second silane coupling agent is 20:80 to 95:5,
wherein a total weight of the first silane coupling agent and the second silane coupling agent is 2.0 to 65.0 wt% with respect to the sum of the weight of the surface treatment layer and the weight of the colored layer; and
a water-washing step of washing with water.

5. The manufacturing method for a colored glass fiber for use in fiber-reinforced plastics or fiber-reinforced thermoplastics according to claim 4, wherein
the glass fiber to be colored is in a chopped strand form or a roving form.

6. A molded product comprising the colored glass fiber according to any one of claims 1 to 3, and a plastic or a thermoplastic.

**Patentansprüche**

1. Farbige Glasfaser zur Verwendung in faserverstärkten Kunststoffen oder faserverstärkten Thermoplasten, umfassend:

eine Oberflächenbehandlungsschicht und eine farbige Schicht, die in dieser Reihenfolge auf eine Glasfaseroberfläche laminiert sind,
wobei die Oberflächenbehandlungsschicht aus einem Oberflächenbehandlungsmittel hergestellt ist, das 2 bis 40 Gew.-% eines ersten Silan-Kupplungsmittels, 60 bis 95 Gew.-% eines Beschichtungsmittels und 0,1 bis 10 Gew.-% eines grenzflächenaktiven Mittels als von dem Lösemittel verschiedene Komponenten in Bezug auf eine Summe der Gewichte der von dem Lösemittel verschiedenen Komponenten enthält, wobei die Oberflächenbehandlungsschicht kein Pigment enthält,
wobei die farbige Schicht ein zweites Silan-Kupplungsmittel und ein Pigment umfasst, wobei ein Gewichtsverhältnis des ersten Silan-Kupplungsmittels zu dem zweiten Silan-Kupplungsmittel 20:80 bis 95:5 beträgt,
wobei die Summe des Gewichts der Oberflächenbehandlungsschicht und des Gewichts der farbigen Schicht 0,25 bis 1,70 Gew.-% in Bezug auf das Gewicht der Glasfaser beträgt,
wobei die Oberflächenbehandlungsschicht ein Gewicht von 0,20 bis 1,30 Gew.-% in Bezug auf das Gewicht der Glasfasern aufweist, und
die farbige Schicht ein Gewicht von 0,03 bis 0,50 Gew.-% in Bezug auf das Gewicht der Glasfaser aufweist,
wobei das Gesamtgewicht des ersten Silan-Kupplungsmittels und des zweiten Silan-Kupplungsmittels 2,0 bis 65,0 Gew.-% in Bezug auf die Summe des Gewichts der Oberflächenbehandlungsschicht und des Gewichts der farbigen Schicht beträgt und
wobei das Pigment gleichförmig an eine Oberfläche der farbigen Glasfaser angeheftet ist.

2. Farbige Glasfaser nach Anspruch 1, wobei die Glasfaser ein zerkleinerter (Glasfaser)Strang oder ein Roving ist.

3. Farbige Glasfaser nach Anspruch 1 oder Anspruch 2, wobei die Glasfaser einen elliptischen Querschnitt aufweist.

4. Herstellungsverfahren für eine farbige Glasfaser zur Verwendung in faserverstärkten Kunststoffen oder faserverstärkten Thermoplasten, umfassend:

eine Oberflächenbehandlungsstufe zum Behandeln von Glasfasern mit einem Oberflächenbehandlungsmittel, das 2 bis 40 Gew.-% eines ersten Silan-Kupplungsmittels, 60 bis 95 Gew.-% eines Beschichtungsmittels und 0,1 bis 10 Gew.-% eines grenzflächenaktiven Mittels als von einem Lösemittel verschiedene Komponenten in Bezug auf die Summe der Gewichte der von dem Lösemittel verschiedenen Komponenten umfasst, wobei das Oberflächenbehandlungsmittel kein Pigment enthält;

eine Stufe des Erhaltens einer mit einer Oberflächenbehandlungsschicht ausgebildeten Glasfaser durch Trocknung;

eine Färbestufe eines Ausbildens einer farbigen Schicht durch Behandeln der mit der Oberflächenbehandlungsschicht ausgebildeten Glasfaser mit einem Färbemittel, das ein zweites Silan-Kupplungsmittel und ein Pigment umfasst,

wobei die Behandlung so durchgeführt wird, dass eine Summe des Gewichts der Oberflächenbehandlungsschicht und des Gewichts der farbigen Schicht von 0,25 bis 1,70 Gew.-%, bezogen auf das Gewicht der Glasfaser, erhalten wird,

wobei die Oberflächenbehandlungsschicht ein Gewicht von 0,20 bis 1,30 Gew.-%, bezogen auf das Gewicht der Glasfaser, aufweist und

die farbige Schicht ein Gewicht von 0,03 bis 0,50 Gew.-%, bezogen auf das Gewicht der Glasfaser, aufweist,

wobei ein Gewichtsverhältnis des ersten Silan-Kupplungsmittels zu dem zweiten Silan-Kupplungsmittel 20:80 bis 95:5 beträgt,

wobei ein Gesamtgewicht des ersten Silan-Kupplungsmittels und des zweiten Silan-Kupplungsmittels 2,0 bis 65,0 Gew.-%, bezogen auf die Summe des Gewichts der Oberflächenbehandlungsschicht und des Gewichts der farbigen Schicht, beträgt; und

eine Wasserwaschstufe eines Waschens mit Wasser.

5. Herstellungsverfahren für eine farbige Glasfaser zur Verwendung in faserverstärkten Kunststoffen oder faserverstärkten Thermoplasten nach Anspruch 4, wobei die zu färbende Glasfaser in Form eines zerkleinerten (Glasfaser)Strangs oder in Form eines Rovings vorliegt.

6. Ausgeformtes Produkt, das die farbige Glasfaser nach einem der Ansprüche 1 bis 3 und einen Kunststoff oder einen Thermoplasten umfasst.

**Revendications**

1. Fibre de verre colorée pour utilisation dans des plastiques renforcés par fibres ou des thermoplastiques renforcés par fibres, comprenant :
une couche de traitement de surface et une couche colorée laminée dans cet ordre sur une surface de fibres de verre :

dans laquelle la couche de traitement de surface est faite d'un agent de traitement de surface contenant 2 à 40 % en poids d'un premier agent de couplage silane, 60 à 95 % en poids d'un agent de recouvrement et 0,1 à 10 % en poids d'un agent tensio-actif en tant que composants autres qu'un solvant par rapport à une somme du poids des composants autres que le solvant, tandis que la couche de traitement de surface ne contient pas de pigment ;

dans laquelle la couche colorée comprend un deuxième agent de couplage silane et un pigment, dans laquelle un rapport de poids du premier agent de couplage silane au deuxième agent de couplage silane est de 20:80 à 95:5 ;

dans laquelle une somme d'un poids de la couche de traitement de surface et de la couche colorée est de 0,25 à 1,70 % en poids par rapport à un poids de la fibre de verre,

dans laquelle la couche de traitement de surface a un poids de 0,20 à 1,30 % en poids par rapport au poids de la fibre de verre ; et

la couche colorée a un poids de 0,03 à 0,50 % en poids par rapport au poids de la fibre de verre,

dans laquelle un poids total du premier agent de couplage silane et du deuxième agent de couplage silane est de 2,0 à 65,0 % en poids par rapport à la somme du poids de la couche de traitement de surface et du poids de la couche colorée ; et

dans laquelle le pigment est collé uniformément à une surface de la fibre de verre colorée.

2. Fibre de verre colorée selon la revendication 1, dans laquelle
la fibre de verre est un fil coupé ou un roving.

3. Fibre de verre colorée selon la revendication 1 ou 2, dans laquelle,
la fibre de verre a une section elliptique.

4. Procédé de fabrication pour une fibre de verre colorée pour utilisation dans des plastiques renforcés par fibres ou des thermoplastiques renforcés par fibres, comprenant :

une étape de traitement de surface pour traiter des fibres de verre avec un agent de traitement de surface contenant 2 à 40 % en poids d'un premier agent de couplage silane, 60 à 95 % en poids d'un agent de recouvrement et 0,1 à 10 % en poids d'un agent tensio-actif en tant que composants autres qu'un solvant par rapport à une somme du poids des composants autres que le solvant, tandis que l'agent de traitement de surface ne contient pas de pigment ;
une étape d'obtention d'une fibre de verre formée avec une couche de traitement de surface par séchage ;
une étape de coloration de formation d'une couche colorée en traitant la fibre de verre formée avec la couche de traitement de surface avec un agent colorant incluant un deuxième agent de couplage silane et un pigment, dans laquelle le traitement est effectué pour avoir une somme d'un poids de la couche de traitement de surface et d'un poids de la couche colorée est de 0,25 à 1,70 % en poids par rapport à un poids de la fibre de verre,
dans laquelle la couche de traitement de surface a un poids de 0,20 à 1,30 % en poids par rapport au poids de la fibre de verre ; et
la couche colorée a un poids de 0,03 à 0,50 % en poids par rapport au poids de la fibre de verre,
dans laquelle un rapport de poids du premier agent de couplage silane au deuxième agent de couplage silane est de 20:80 à 95:5 ;
dans laquelle un poids total du premier agent de couplage silane et du deuxième agent de couplage silane est de 2,0 à 65,0 % en poids par rapport à la somme du poids de la couche de traitement de surface et du poids de la couche colorée ; et
une étape de lavage à l'eau de lavage avec de l'eau.

5. Procédé de fabrication pour une fibre de verre colorée pour utilisation dans des plastiques renforcés par fibres ou des thermoplastiques renforcés par fibres selon la revendication 4, dans lequel
la fibre de verre à colorer est sous forme d'un fil coupé ou d'un roving.

6. Produit moulé comprenant la fibre de verre colorée selon l'une quelconque des revendications 1 à 3 et un plastique ou un thermoplastique.

# FIG.1A

| COLORED LAYER |
| SURFACE TREATMENT LAYER |
| GLASS FIBER SURFACE |

# FIG.1B

| COLORED LAYER |
| GLASS FIBER SURFACE |

# FIG.2

```
          ┌─────────────────────────┐
          │ SPINNING OF MOLTEN GLASS │
          └─────────────────────────┘
                       │
                       ▼
      ┌──────────────────────────────────────┐
      │ APPLICATION OF SURFACE TREATMENT AGENT │
      └──────────────────────────────────────┘
          │                           │
          ▼                           ▼
      ┌────────┐              ┌────────────────┐
      │ DRYING │              │ CHOPPED STRAND │
      └────────┘              └────────────────┘
          │                           │
          ▼                           ▼
  ┌──────────────────────┐      ┌────────┐
  │ ROVING/CHOPPED STRAND │      │ DRYING │
  └──────────────────────┘      └────────┘
              │                      │
              ▼                      ▼
          ┌────────────────────┐
          │ COLORING TREATMENT │
          └────────────────────┘
                    │
                    ▼
          ┌────────────────┐
          │ WATER-WASHING  │
          └────────────────┘
                    │
                    ▼
              ┌────────┐
              │ DRYING │
              └────────┘
                    │
                    ▼
             ( COLORED GLASS )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008516887 A
- JP 2004315981 A
- JP 2007092188 A